# EUROPEAN PATENT SPECIFICATION

(11) **EP 1 601 554 B1**
(45) Date of publication and mention of the grant of the patent: **18.07.2007**
(21) Application number: 04716075.9
(22) Date of filing: 01.03.2004
(51) Int. Cl.: B60R 16/04, H02H 3/00, H02P 9/00

(54) **ADR UNIT**
ADR-EINHEIT
UNITE ADR

(30) Priority: 04.03.2003 SE 0300577
(43) Date of publication of application: 07.12.2005
(73) Proprietor: VOLVO LASTVAGNAR AB, 405 08 Göteborg (SE)
(72) Inventor: WESTERLIND, Hans, S-449 40 Nol (SE)
(74) Representative: Fröhling, Werner Otto
(86) International application number: PCT/SE2004/000273
(87) International publication number: WO 2004/078527

(56) References cited:
- WO-A1-02/068244
- DE-C1- 19 922 332
- US-A- 5 818 121
- US-B1- 6 417 579
- US-B1- 6 465 908

## Description

### TECHNICAL FIELD:

The present invention relates to an ADR unit according to the preamble to claim 1. An ADR unit is disclosed in for instance DE 199 22 332 C.

### BACKGROUND ART:

For the transportation of dangerous goods by vehicle, special safety requirements apply. There are national safety requirements drawn up by each individual country and also international agreements that regulate safety requirements at an international level. One such international agreement is "The European Agreement concerning the International Carriage of Dangerous Goods by Road (ADR)", agreed in Geneva on September 30, 1957 and arranged by UNECE. This agreement has since been updated. This agreement regulates how dangerous goods are to be transported by goods vehicle by road. One of the requirements is that the vehicle's supply voltage must be able to be switched off while travelling, for example when the driver activates an emergency switch in the cab, when the system detects a safety-related incident or in the event of an accident.

Normally vehicles that are to be ADR-classified must be ordered specially, with special equipment that ensures that the vehicle meets the requirements laid down. This equipment consists usually of a control unit with a number of inputs, one or more emergency switches and a power relay that can disconnect the supply from the battery to the vehicle's electrical system. The power relay is connected after the battery, so that the whole vehicle is without current when the power relay has disconnected the supply. The only components that are permitted to be sourced directly from the battery are components that are protection-classified in accordance with EN 50020. An example of such a component is the tachograph. As the said agreement is European, it applies primarily to goods vehicles that have 24 Volt electrical systems, but 12 Volt electrical systems are also found on goods vehicles, particularly on smaller goods vehicles.

Although purely technically the ADR system that is described works satisfactorily in most situations, it has a number of disadvantages.

Firstly, the system consists of several separate parts that are connected by cables including various connections. Each component has a certain reliability, and the reliability of each separate unit is added to the system's total reliability. This means that it is expensive and complicated to make the reliability of the total system attain the required level. In addition, each contact point, that is each connection, has considerably lower reliability than, for example, a control unit, depending upon both the connector and the cables. In a normal main relay, for example, both the control leads and the power leads are connected with screw connections, which are subject to corrosion. In particular, the connections that are connected to the plus voltage, that is to the battery's supply voltage, are especially subjected to corrosion on account of electron migration in impurities such as, for example, salt water. In addition, the cables are subjected to abrasion.

Secondly, the units are located on the chassis in various places. It is difficult to find a particular position for each unit that can be used for all the different vehicles and types of vehicle. This means that the system requires several different sets of cables in order to cover all the variants of vehicle.

In addition, mounting the separate units takes up unnecessary space.

Thirdly, the separate units are not intelligent, which means that a so-called load dump can occur. This means that the battery can be disconnected at the same time as the generator is charging, which can lead to an unwanted voltage increase.

Fourthly, separate units with cabling are unnecessarily expensive.

Fifthly, the mounting of separate units is unnecessarily expensive.

### DISCLOSURE OF INVENTION:

The object of the invention is therefore to achieve an ADR unit with high reliability, which is cheap and simple to fit, and with increased safety.

The solution to this problem according to the invention is described in the characterizing part of claim 1. The other claims contain advantageous further developments of the ADR unit according to the invention.

With an ADR unit for a motor vehicle, comprising at least two inputs intended for at least two switches, an output for activating a generator's charging input, an input for the vehicle's battery and an output to the vehicle's electrical system, characterized in that the ADR unit can disconnect the battery from the vehicle's electrical system, the problem is solved according to the invention by the ADR unit comprising a time delay that ensures that the battery is disconnected from the vehicle's electrical system a predefined time after a first predefined event.

By means of this first embodiment of the ADR unit according to the invention, an integrated ADR unit is obtained that can break the vehicle's supply voltage after a predefined time delay. The aim of this is to increase the safety during the disconnection of the vehicle's supply voltage, by giving the driver the opportunity to change his or her mind and also by making it possible to make the vehicle without current during operation, while at the same time avoiding a load dump situation.

In an advantageous first further development of the ADR unit according to the invention, an output deactivates the generator's charging input before the ADR unit disconnects the battery from the vehicle's electrical system. The advantage of this is that a load dump situation is avoided when the vehicle's supply voltage is disconnected during operation.

In an advantageous second further development of the ADR unit according to the invention, the ADR unit is provided with an additional input for units that require current while the vehicle is stationary. The advantage of this is that the vehicle's supply voltage can be broken automatically when the vehicle is not being used.

In an advantageous third further development of the ADR unit according to the invention, the ADR unit is provided with an additional output that can activate a light function. The advantage of this is that a fault indication can be displayed in the event of a fault function.

In an advantageous fourth further development of the ADR unit according to the invention, the ADR unit is provided with an additional input connected to a collision detector. The advantage of this is that the vehicle's supply voltage can be broken automatically in the event of a collision.

In an advantageous fifth further development of the ADR unit according to the invention, the ADR unit is provided with an additional output that can activate a warning flasher function. The advantage of this is that the warning flasher can be activated automatically in the event of a collision.

In an advantageous sixth further development of the ADR unit according to the invention, the ADR unit is provided with two separate inputs intended to be connected to a switch comprising two switch elements. The advantage of this is that a fault function in the switch can be detected.

### BRIEF DESCRIPTION OF DRAWINGS

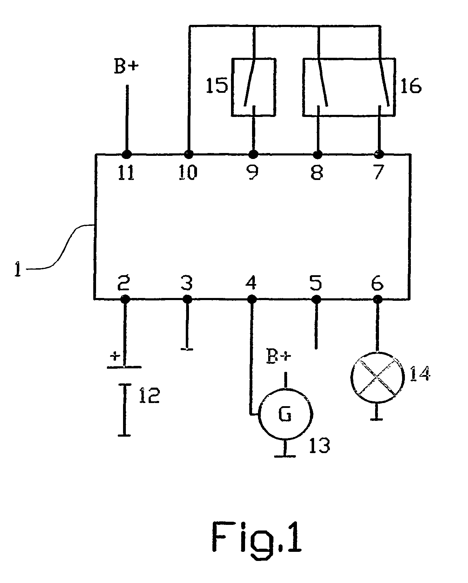

The invention will be described in greater detail in the following, with reference to an embodiment that is illustrated in the attached drawing, where Figure 1 shows schematically an ADR unit according to the invention.

### MODE(S) FOR CARRYING OUT THE INVENTION

The following embodiments of the invention with further developments that are described are only to be regarded as examples and are in no way to limit the protection provided by the claims.

Figure 1 shows a first embodiment of an ADR unit 1 according to the invention. The ADR unit is integrated, that is all its components are located in the same casing, for example a molded plastic cover. The ADR unit can either be realized with discrete components or with a processor-based circuit. The ADR unit 1 comprises a number of outputs and inputs 2 - 11. All the inputs and outputs are advantageously overload-protected and short-circuit-protected. The input 2 is connected to the vehicle's battery 12. The input 3 is connected to the vehicle's chassis earth. The output 4 controls the charging by the generator 13. The input 5 is a standby input. The output 6 controls a warning lamp 14. The inputs 7, 8 and 9 are connected to external switches 15 and 16. The output 10 provides the switches 15 and 16 with a reference voltage. The output 11 is connected to the vehicle's electrical system (B+). The switch 15 is integrated into the ignition lock and the switch 16 is located somewhere on the vehicle, for example in the cab or on the chassis. The switch 16 can be replaced by several switches, if required.

The voltage output from the vehicle's generator 13 is connected to the vehicle's electrical system (B+), that is to the output 11. This means that if the ADR unit only disconnects the battery from the electrical system, the generator will supply current without a defined load, that is without the battery as load, which will lead to a so-called load dump situation, when the voltage can increase in an uncontrolled manner. In order to avoid this, the ADR unit first switches off the generator's charging input, for example one second before the battery is disconnected, with output 4.

The ADR unit 1 is capable of breaking a high current, for example 300 Amps. The smallest current that is to be able to be broken is the current the vehicle draws with normal driving, which can be approximately 50 Amps. The ADR unit can advantageously break considerably more current, which increases both the safety margins and the reliability. This current breaker function can either consist of an electromechanical power relay or a power semiconductor component. The vehicle's battery 12 is connected to input 2 and the vehicle's electrical system is connected to output 11. These connections must be able to handle a high current, so the connections are advantageously robust and, in addition, the connected cables are thick, which requires the connections to be mechanically durable. Suitable connections are, for example, screw terminals.

The ADR unit is mounted on the vehicle's chassis, suitably in the vicinity of the batteries in order to reduce the voltage loss over the supply cables. In a normal driving situation, that is when there is no emergency situation, the vehicle's electrical system is connected to the battery 12. When the vehicle is to be shut down for a fairly long period of time, for example when it is to be parked overnight, the driver can ensure, by using the switch 16, that the vehicle is without voltage, that is the electrical system is not connected to the battery 12.

When the key is placed in the ignition lock, the switch 15 sends a signal to the input 9 which activates the ADR unit's current breaker function so that the electrical system is connected to the battery 12. The current breaker function can be bistable, that is alternating. Thereafter, the vehicle can be started as normal. At the same time, the output 4 activates the generator's charging input (pre-excitation) so that the generator can supply current to the battery and the electrical system.

When the switch 16 is activated, the ADR unit breaks the supply voltage from the battery, irrespective of other functions. This takes place after a suitable time delay, for example after three seconds. The time delay is partly in order to enable the driver to change his or her mind if he or she had activated the switch by mistake, and partly in order to enable the ADR unit to deactivate the generator's charging input so that a load dump situation is avoided. There can be several switches 16 on the vehicle, for example one inside the cab and one outside the vehicle. These are connected in such a way that any one of the switches can activate the breaking of the battery's supply voltage. For example, the switches can normally be closed and connected in series, or normally be open and connected in parallel. In order to increase the safety due to the fact that the switch 16 breaks all the voltage supply to the vehicle, the ADR unit is provided with a monitor function that monitors the switch 16. This is carried out so that a fault in the switch 16 does not cause the whole vehicle to be without current. This is carried out by the switch 16 being connected to both inputs 7 and 8. In addition, the switch 16 has two separate switching elements. When one of the inputs 7 or 8 detects a signal change, the ADR unit compares input 7 with input 8. If they have different levels, the vehicle's supply voltage is not broken. In the event of a fault function, output 6 is activated in addition, so that the lamp 14 gives a fault indication. The lamp 14 can also be used to give a fault indication if, for example, the ADR unit has not been able to disconnect the battery when a switch 16 has been activated. In this case, the lamp 14 can, for example, flash.

In a second embodiment of the ADR unit according to the invention, the ADR unit is equipped with a standby input 5. The standby input 5 is used so that the ADR unit can break the supply voltage from the battery after a certain time delay, for example 20 minutes, so that the vehicle is completely without voltage when it is not being used, for example when it is parked. When the vehicle is stopped and the key is removed from the ignition lock and the standby input 5 is low, the ADR unit breaks the supply voltage from the battery after the abovementioned time delay.

The standby input 5 is connected to certain units on the vehicle that require current and that should be possible to use even when the vehicle is parked and the key has been removed from the ignition lock. Such units that require current while the vehicle is stationary can, for example, be parking lights, warning flashers, parking heater, radio/CD player or air-conditioning. When any of these units is used, that is when the standby input 5 is high, the ADR unit does not break the supply voltage from the battery when the key is removed from the ignition lock. If the standby input 5 later becomes low, that is when all the units that require current while the vehicle is stationary are switched off, the battery is disconnected after the abovementioned time delay. This means that when the vehicle has been shut down for a fairly long period of time, for example when it has been parked overnight, the vehicle is without voltage even though the driver may have forgotten to activate the switch 16.

In a third embodiment of the ADR unit according to the invention, the ADR unit is provided with an additional voltage output. This output can supply a limited current and/or current for a special unit even when the ADR unit has disconnected the battery. This output is intended for some safety-related function that should be active in an emergency situation, for example a telephone integrated into the vehicle and/or warning flashers.

In a fourth embodiment of the ADR unit according to the invention, the ADR unit is provided with an additional input for activating the ADR unit in the event, for example, of an emergency situation. This input is advantageously connected to a collision detector, for example an acceleration sensor, and automatically disconnects the battery when the input is active. In the event of a collision, it is advantageous to be able to use warning flashers. The ADR unit can therefore also activate an additional output for a warning flasher function in the event of a collision. A telephone integrated into the vehicle can also be connected to this additional output, which telephone is so arranged that it automatically dial, for example, a rescue service when a collision has occurred. This additional output suitably provides a limited current, so that any short-circuit does not cause, for example, overheating.

The invention is not to be considered to be limited to the embodiments described above, a number of further variants and modifications being possible within the scope of the following claims. For example, the ADR unit can also be provided with inputs for detecting other conditions associated with safety.

## Claims

1. An ADR unit (1) for a motor vehicle, i.e. a unit which is able to switch off the vehicle's supply voltage while travelling, comprising at least two inputs (7, 8, 9) intended for at least two switches (15, 16), an output (4) for activating a generator's charging input, an input (2) for the vehicle's battery and an output (11) to the vehicle's electrical system, where the ADR unit (1) can disconnect the battery (12) from the vehicle's electrical system, **characterized in that** the ADR unit (1) comprises a time delay that ensures that the battery (12) is disconnected from the vehicle's electrical system a predefined time after a first predefined event.

2. An ADR unit as claimed in claim 1, **characterized in that** the output (4) deactivates the generator's charging input before the ADR unit (1) disconnects the battery (12) from the vehicle's electrical system.

3. An ADR unit as claimed in claim 1 or 2, **characterized in that** the ADR unit (1) can connect the battery (12) to the vehicle's electrical system in the event of a second predefined event.

4. An ADR unit as claimed in any one of claims 1 to 3, **characterized in that** the ADR unit (1) comprises an input (5) for units that require current while the vehicle is stationary, which input (5) ensures that the battery (12) is connected to the vehicle's electrical system when the input (5) is active.

5. An ADR unit as claimed in claim 4, **characterized in that** the ADR unit (1) comprises a time delay that ensures that the battery (12) is disconnected from the vehicle's electrical system a predefined time after the input (5) becomes inactive.

6. An ADR unit as claimed in any one of claims 1 to 5, **characterized in that** the ADR unit (1) can disconnect more than 50 Amps.

7. An ADR unit as claimed in any one of claims 1 to 6, **characterized in that** the ADR unit (1) has an output (6) for a light indication, which can be used to display a fault indication.

8. An ADR unit as claimed in any one of claims 1 to 7, **characterized in that** the ADR unit (1) has an input for a collision detector.

9. An ADR unit as claimed in any one of claims 1 to 8, **characterized in that** the ADR unit (1) has an output that can activate a warning flasher function.

10. An ADR unit as claimed in any one of claims 1 to 9, **characterized in that** two separate inputs (7, 8) are intended to be connected to a switch (16) comprising two switch elements.

## Patentansprüche

1. ADR-Einheit (1) für ein Kraftfahrzeug, d. h. eine Einheit, die die Versorgungsspannung des Fahrzeugs beim Fahren abschalten kann, mit wenigstens zwei Eingängen (7, 8, 9), die für wenigstens zwei Schalter (15, 16) bestimmt sind, einem Ausgang (4) zur Aktivierung eines Generatorladeeingangs, einem Eingang (2) für die Fahrzeugbatterie und einem Ausgang (11) zu dem elektrischen System des Fahrzeugs, wobei die ADR-Einheit (1) die Batterie (12) von dem elektrischen System des Fahrzeugs trennen kann, **dadurch gekennzeichnet, dass** die ADR-Einheit (1) eine Zeitverzögerung umfasst, die sicherstellt, dass die Batterie (12) eine vorher bestimmte Zeit nach einem vorher bestimmten Ereignis von dem elektrischen System des Fahrzeugs getrennt wird.

2. ADR-Einheit nach Anspruch 1, **dadurch gekennzeichnet, dass** der Ausgang (4) den Generatorladeeingang deaktiviert bevor die ADR-Einheit (1) die Batterie (12) von dem elektrischen System des Fahrzeugs trennt.

3. ADR-Einheit nach Anspruch 1 oder 2, **dadurch gekennzeichnet, dass** die ADR-Einheit (1) die Batterie (12) mit dem elektrischen System des Fahrzeugs bei Auftreten eines zweiten vorher bestimmten Ereignisses verbinden kann.

4. ADR-Einheit nach einem der Ansprüche 1 bis 3, **dadurch gekennzeichnet, dass** die ADR-Einheit (1) einen Eingang (5) für Einheiten umfasst, die einen Strom benötigen, während das Fahrzeug stationär ist, wobei der Eingang (5) sicherstellt, dass die Batterie (12) mit dem elektrischen System des Fahrzeugs verbunden ist, wenn der Eingang (5) aktiv ist.

5. ADR-Einheit nach Anspruch 4, **dadurch gekennzeichnet, dass** die ADR-Einheit (1) eine Zeitverzögerung umfasst, die sicherstellt, dass die Batterie (12) von dem elektrischen System des Fahrzeugs eine vorher bestimmte Zeit nach dem Inaktivwerden des Eingangs (5) getrennt wird.

6. ADR-Einheit nach einem der Ansprüche 1 bis 5, **dadurch gekennzeichnet, dass** die ADR-Einheit (1) mehr als 50 Amps trennen kann.

7. ADR-Einheit nach einem der Ansprüche 1 bis 6, **dadurch gekennzeichnet, dass** die ADR-Einheit (1) einen Ausgang (6) für eine Lichtanzeige aufweist, die zur Anzeige einer Fehleranzeige verwendet werden kann.

8. ADR-Einheit nach einem der Ansprüche 1 bis 7, **dadurch gekennzeichnet, dass** die ADR-Einheit (1) einen Eingang für einen Kollisionsdetektor aufweist.

9. ADR-Einheit nach einem der Ansprüche 1 bis 8, **dadurch gekennzeichnet, dass** die ADR-Einheit (1) einen Ausgang aufweist, der eine Wamblinkerfunktion aktivieren kann.

10. ADR-Einheit nach einem der Ansprüche 1 bis 9, **dadurch gekennzeichnet, dass** zwei separate Eingänge (7, 8) für eine Verbindung mit einem Schalter (16) bestimmt sind, der zwei Schalterelemente umfasst.

## Revendications

1. Unité ADR (1) pour un véhicule à moteur, c'est-à-dire une unité qui est capable de couper la tension d'alimentation du véhicule en mouvement, comportant au moins deux entrées (7, 8, 9) prévues pour au moins deux commutateurs (15, 16), une sortie (4) pour activer une entrée de chargement du générateur, une entrée (2) pour la batterie du véhicule et une sortie (11) vers le système électrique du véhicule, où l'unité ADR (1) peut déconnecter la batterie (12) du système électrique du véhicule, **caractérisée en ce que** l'unité ADR (1) inclut un retard de temps qui garantit que la batterie (12) est déconnectée du système électrique du véhicule un temps prédéfini après un premier événement prédéfini.

2. Unité ADR selon la revendication 1, **caractérisée en ce que** la sortie (4) désactive l'entrée de chargement du générateur avant que l'unité ADR (1) déconnecte la batterie (12) du système électrique du véhicule.

3. Unité ADR selon la revendication 1 ou 2, **caractérisée en ce que** l'unité ADR (1) peut connecter la batterie (12) au système électrique du véhicule dans l'éventualité d'un second événement prédéfini.

4. Unité ADR selon l'une quelconque des revendications 1 à 3, **caractérisée en ce que** l'unité ADR (1) comporte une entrée (5) pour des unités qui nécessitent du courant alors que le véhicule est immobile, laquelle entrée (5) garantit que la batterie (12) est connectée au système électrique du véhicule lorsque l'entrée (5) est active.

5. Unité ADR selon la revendication 4, **caractérisée en ce que** l'unité ADR (1) inclut un retard de temps qui garantit que la batterie (12) est déconnectée du système électrique du véhicule un temps prédéfini après que l'entrée (5) soit devenue inactive.

6. Unité ADR selon l'une quelconque des revendications 1 à 5, **caractérisée en ce que** l'unité ADR (1) peut déconnecter plus de 50 A.

7. Unité ADR selon l'une quelconque des revendications 1 à 6, **caractérisée en ce que** l'unité ADR (1) a une sortie (6) pour une indication lumineuse, qui peut être utilisée pour afficher une indication de défaut.

8. Unité ADR selon l'une quelconque des revendications 1 à 7, **caractérisée en ce que** l'unité ADR (1) a une entrée pour un détecteur de collision.

9. Unité ADR selon l'une quelconque des revendications 1 à 8, **caractérisée en ce que** l'unité ADR (1) a une sortie qui peut activer une fonction de clignotant d'avertissement.

10. Unité ADR selon l'une quelconque des revendications 1 à 9, **caractérisée en ce que** deux entrées séparées (7, 8) sont prévues pour être reliées à un commutateur (16) comportant deux éléments de commutateur.
